# EUROPÄISCHE PATENTSCHRIFT

(11) **EP 2 295 895 B1**
(45) Veröffentlichungstag und Bekanntmachung des Hinweises auf die Patenterteilung: **31.12.2014**
(21) Anmeldenummer: 10170594.5
(22) Anmeldetag: 23.07.2010
(51) Int. Cl.: F24J 2/54, F24J 2/52

(54) **Nachführvorrichtung**
Tracking device
Dispositif de poursuite

(30) Priorität: 14.08.2009 DE 202009005140 U
(43) Veröffentlichungstag der Anmeldung: 16.03.2011
(73) Patentinhaber: SCHÜCO International KG, 33609 Bielefeld (DE)
(72) Erfinder: Imkamp, Gerd, 33334 Gütersloh (DE)
(74) Vertreter: Dantz, Jan Henning

(56) Entgegenhaltungen:
- EP-A2- 1 995 535
- WO-A1-00/31477
- WO-A2-2009/054020
- US-A1- 2005 284 468
- US-A1- 2009 194 669

## Beschreibung

Die vorliegende Erfindung betrifft eine Nachführvorrichtung für ein Solarelement.

Die DE 101 92 244 offenbart eine Nachführvorrichtung zur Nachführung eines Solarelementes nach dem Stand der Sonne, wobei an einem rahmenförmigen Träger das Solarelement fixiert ist. Der Träger ist an einem weiteren Aufnahmeträger gehalten, der an einem Standpfeiler als Anker fixiert ist. Solche Anker müssen je nach Bodenstruktur unterschiedlich ausgelegt sein. Der Untergrund kann stark variieren, so dass es Schwierigkeiten geben kann, den Standpfeiler als Anker zu fixieren. Zudem sind der Träger und der Aufnahmeträger kompliziert zu montieren und aufwändig in der Herstellung.

Die US 4 295 621 offenbart eine Nachführvorrichtung, bei der im Boden ein Pfosten als Anker montiert wird. In dem Pfosten ist an seiner oberen Stirnseite eine Aufnahme mit einer Lagerschale montiert. In die Lagerschale ist eine vertikale Achse eines Drehgestells für den Solarträger eingefügt. Auch bei dieser Konstruktion bilden der bodenseitige Pfosten und das übrige Gestell der Nachführvorrichtung eine Einheit, die schlecht bei unterschiedlichen Bodenbeschaffenheiten montiert werden kann.

In der WO 00/31477 ist eine Nachführvorrichtung für Solarmodule gemäß dem Oberbegriff des Anspruchs 1 gezeigt, bei der auf einem Anker ein Kopplungselement mit einem Hohlraum als Aufnahme für einen Abschnitt des Ankers vorgesehen ist. An dem Kopplungselement ist eine horizontal ausgerichtete Hülse festgelegt.

Die US 2009/0194669 ist ein Anker für eine Solaranlage gezeigt, bei dem motorisch angetriebenes Lager vorgesehen ist, um eine Rahmengestell mit Solarmodulen um eine vertikale Achse zu drehen.

Weitere Nachführvorrichtungen für Solarmodule sind in der US 2005/0284468, EP 1 995 535 und WO2009/054020 gezeigt.

Es ist daher Aufgabe der vorliegenden Erfindung, eine Nachführvorrichtung zu schaffen, die auf einfache Weise bei unterschiedlichen Bodenbeschaffenheiten montiert werden kann.

Diese Aufgabe wird mit einer Nachführvorrichtung mit den Merkmalen des Anspruches 1 gelöst.

Erfindungsgemäß umfasst die Nachführvorrichtung für ein Solarelement einen um eine Achse drehbaren Träger, der über ein Antriebselement drehbar ist, und ein an einem Anker festlegbares Kopplungselement, das eine Axiallagerfläche aufweist, wobei eine Aufnahme ausgebildet ist, in die ein Anker einfügbar ist und über Befestigungsmittel klemmend festlegbar ist. Durch diese Konstruktion kann der Träger über das Kopplungselement flexibel an unterschiedlichen Ankern montiert werden, die je nach Bodenbeschaffenheit ausgewählt werden könne. Es ist nicht erforderlich, den Träger schon auf den Anker abzustimmen, sondern das Kopplungselement stellt eine universelle Verbindung zwischen einem geeigneten Anker und den Träger bereit. Dies erhöht die Möglichkeit der Vorfertigung und somit der Wirtschaftlichkeit.

Als Anker im Sinne der vorliegenden Anmeldung wird eine Befestigung im Erdreich bzw. Fundament verstanden, also insbesondere Rammpfosten, Eindrehanker zum Eindrehen in das Erdreich, Betonfußpfosten, Betonfundamente oder andere am Boden festlegbare Elemente, die mit dem Kopplungselement verbunden werden.

Vorzugsweise sind die Befestigungsmittel relativ zu der Aufnahme des Kopplungselementes verstellbar. Insbesondere können die Befestigungsmittel gegen eine Fläche an dem oberen Abschnitt des Ankers geklemmt werden, um dadurch das Kopplungselement und den darauf angeordneten Träger mit dem Solarelement festzulegen. Durch die Bewegung der Befestigungsmittel relativ zu der Aufnahme bzw. den Seitenwänden des Kopplungselementes kann die Geometrie des Ankers in weiten Bereichen frei gewählt werden. Je nach Untergrund können dann stangenförmige, Profile, Betonpfosten oder andere Anker eingesetzt werden.

Die Aufnahme ist als Hohlraum ausgebildet, in den ein oberer Abschnitt des Ankers einfügbar ist. Dadurch wird der Befestigungsbereich geschützt in dem Hohlraum angeordnet, um Witterungseinflüsse zu minimieren. Das Kopplungselement weist dabei auf der zu dem Anker gewandten Seite ein Hohlprofil auf, in dem die Aufnahme ausgebildet ist. Dadurch ist der Anker mit einem oberen Abschnitt allseitig umschlossen in dem Hohlprofil angeordnet.

Vorzugsweise ist an mindestens einer um die Aufnahme angeordneten Seitenwand eine Gewindebohrung für ein Befestigungsmittel ausgebildet. Das Befestigungsmittel kann dadurch als Schraube, Klemmbolzen oder anderes Befestigungsmittel ausgebildet sein, das leicht an dem Kopplungselement zu montieren ist.

Für eine stabile Befestigung des Trägers weist das Kopplungselement einen nach oben hervorstehenden Lagerzapfen auf, auf den der Träger aufgesteckt ist. Der Lagerzapfen bildet dann eine vertikale Drehachse aus, um die der Träger drehbar ist.

In einer weiteren Ausgestaltung ist an dem Träger ein Trägerrahmen gehalten, an dem ein Solarelement festgelegt ist.

Um den Träger leichtgängig drehen zu können, kann das Kopplungselement aus Kunststoff und/oder Metall hergestellt sein. Es ist auch möglich, die Axiallagerfläche aus Kunststoff auszubilden oder mit einem Gleitring zu versehen, um eine leichtgängige Drehung des Trägers zu gewährleisten. Auch ein vorgefertigtes Axiallager kann an dem Kopplungselement montiert sein.

Die Erfindung wird nachfolgend anhand mehrerer Ausführungsbeispiele mit Bezug auf die beigefügten Zeichnungen näher erläutert. Es zeigen:

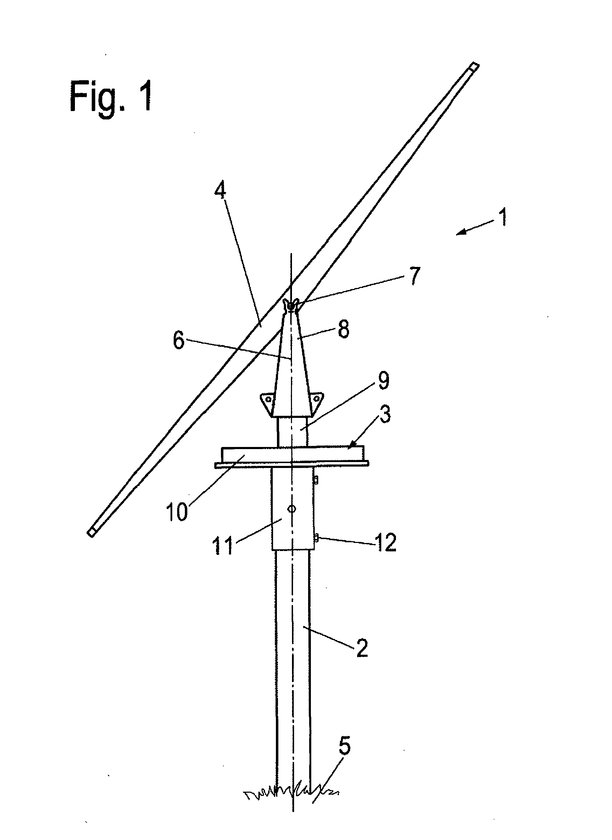

- Figur 1: eine Seitenansicht auf eine erfindungsgemäße Nachführvorrichtung;

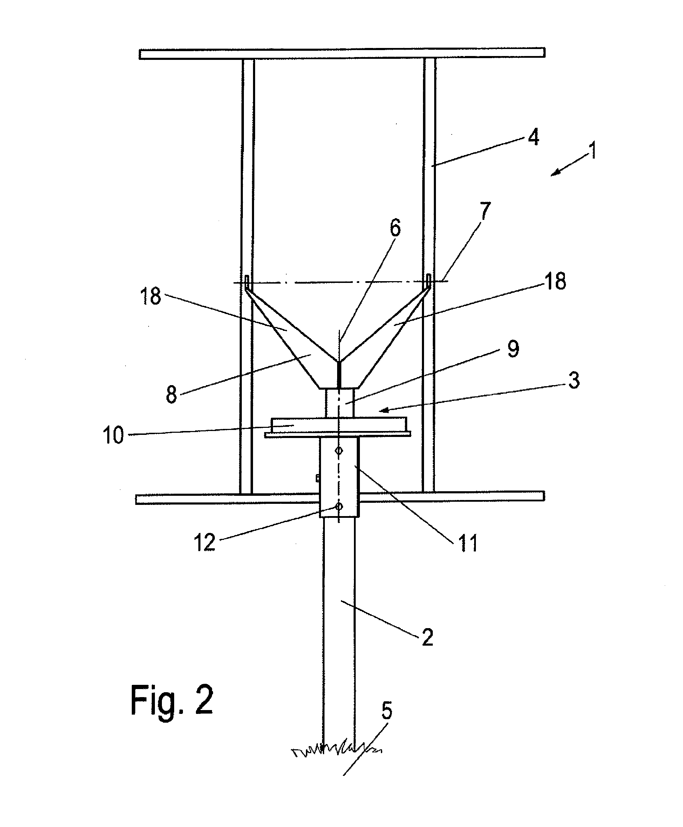

- Figur 2: eine Rückansicht auf die Nachführvorrichtung der Figur 1;
- Figur 3: eine seitliche Explosionsdarstellung der Nachführvorrichtung der Figur 1;
- Figuren 4A und 4B: zwei Ansichten des Kopplungselementes der Nachführvorrichtung;
- Figuren 5A bis 5C: mehrere Draufsichten auf das Kopplungselement der Figur 4 in unterschiedlichen Montagepositionen;
- Figur 6: eine perspektivische Ansicht des weiteren Ausführungsbeispiels eines Kopplungselementes, und
- Figuren 7A und 7B: zwei Draufsichten auf das Kopplungselement der Figur 6 in unterschiedlichen Montagepositionen.

Eine Nachführvorrichtung 1 wird an einem Anker 2 montiert, der im Boden 5 festgelegt ist. Der Anker 2 kann als Pfosten aus Beton oder Stahl, Profil oder anderes Bauteil ausgebildet sein, das im Boden 5 verankert ist.

Die Nachführvorrichtung 1 dient zur Halterung eines Tragrahmens 4 für ein Solarelement, das als Kollektor, Absorber, Deflektor oder Photovoltaikmodul ausgebildet sein kann.

Der Tragrahmen 4 ist an einem Drehgestell 3 um eine vertikale Achse 6 drehbar gelagert, wobei das Drehgestell 3 einen Träger 8 umfasst, der an einem Kopplungselement 11 abgestützt ist. Das Drehgestell 3 kann den Träger 8 um die Achse 6 drehen, um das Solarelement dem Sonnenverlauf nachzuführen (Einstellung des Azimuts). Der Tragrahmen 4 kann dabei um eine horizontale Achse 7 schwenkbar gelagert sein, was die Montage erleichtert. Optional kann der Tragrahmen 4 auch über Hebel um die horizontale Achse 7 geschwenkt werden (Einstellung der Elevation), um die Solarelemente der Sonnenstandshöhe nachzuführen.

Der Träger 8 umfasst zwei Arme 18, die V-förmig nach oben hervorstehen, und an denen endseitig der Tragrahmen 4 für das Solarelement fixiert ist. Die Arme 18 stehen in einem Winkel von etwa 45° nach oben und halten den Tragrahmen 4 wahlweise um die horizontale Achse 7 schwenkbar oder legen den Tragrahmen 4 in einer gewünschten Winkelstellung fest. Der Tragrahmen 4 dient zur Aufnahme von Solarelementen, die eine Größe zwischen 4 bis 10 m², vorzugsweise zwischen 5 bis 7 m², aufweisen. Die Arme 18 sind vorzugsweise als Stahlstanz-Biegeteile hergestellt.

Der Träger 8 ist an einem vertikalen Lager 9 gehalten, an dem ein Antriebsrad 10 angeordnet ist. Durch Drehung des Antriebsrades 10 lässt sich der Träger 8 mit dem Tragrahmen 4 um die vertikale Achse 6 drehen. Dabei kann an dem Antriebsrad 10 ein Zugseil vorgesehen sein, das mit einem Antrieb gekoppelt ist. Statt dem Zugseil können auch andere Zugelemente, Zahnräder, Zahnriemen etc. für den Antrieb des Antriebsrades 10 eingesetzt werden. Insbesondere können eine Vielzahl von Antriebselementen 10 mehrerer Nachführvorrichtungen 1 über ein Antriebselement miteinander gekoppelt sein.

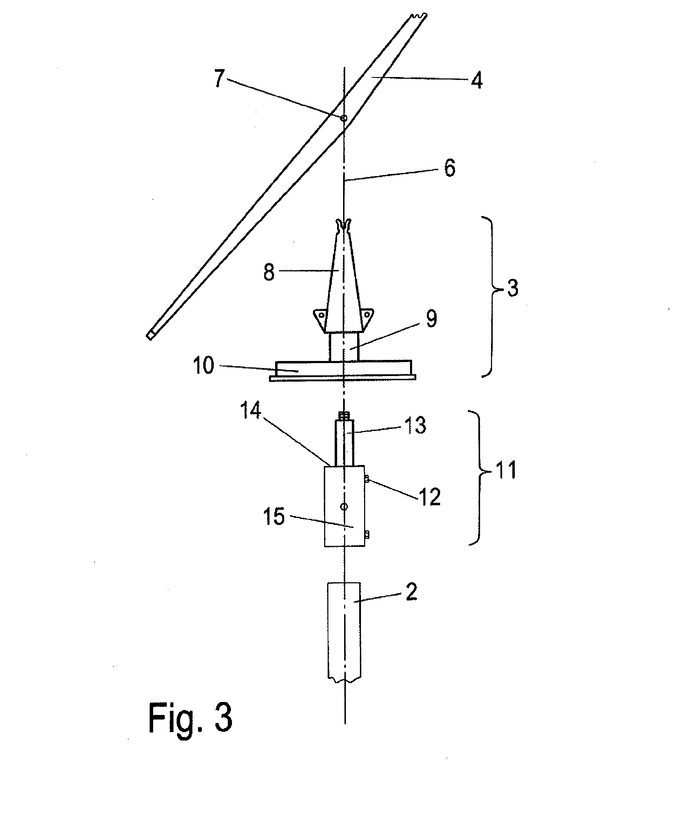

Um das Drehgestell 3 mit dem drehbaren Träger 8 und dem Kopplungselement 11 auf unterschiedliche Anker 2 montieren zu können, wird ein universelles Kopplungselement 11 eingesetzt, das auf unterschiedlichen Typen von Ankern 2 fixierbar ist. Das in Figur 3 gezeigte Kopplungselement 11 umfasst einen nach oben hervorstehenden Lagerzapfen 13, auf den der Träger 8 mit dem hohlen Lager 9 aufgesteckt wird. Am unteren Ende des Lagerzapfens 13 ist eine horizontale Lagerfläche 14 ausgebildet, die als Axiallager ausgebildet ist und auf der eine Lagerfläche des Lagers 9 und/oder des Antriebselementes 10 aufliegt.

Das Kopplungselement 11 weist auf der zu dem Anker 2 gewandten Seite eine Halterung mit Seitenwänden 15 auf, die beispielsweise als zylindrische Buchse ausgebildet ist. An den Seitenwänden 15 sind Befestigungsmittel 12 in Form von Gewindebolzen angeordnet, die in entsprechenden Gewindeöffnungen in den Seitenwänden 15 eingedreht sind.

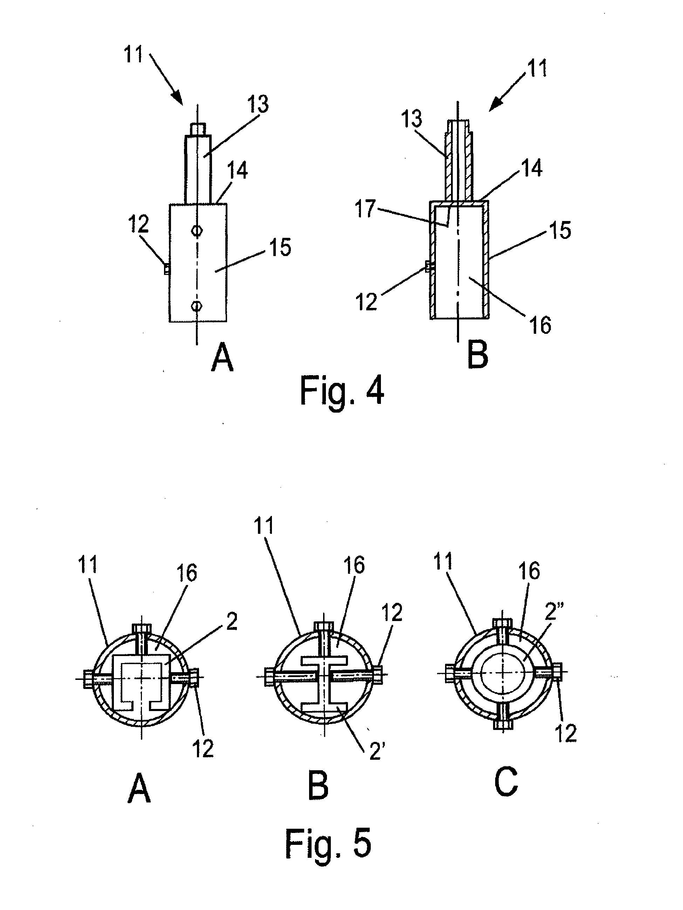

In Figur 4 ist das Kopplungselement 11 im Detail dargestellt, das in einem mittleren Bereich zwischen dem Lagerzapfen 13 und den Seitenwänden 15 eine Axiallagerfläche 14 ausbildet. Es ist auch möglich, an der Axiallagerfläche 14 einen Lagerring vorzusehen, der dann Bestandteil des Kopplungselementes 11 ist. Die Seitenwände 15 umgeben eine zylinderförmige Aufnahme 16, in die ein oberer Abschnitt eines Ankers 2 einfügbar ist.

In den Figuren 5A bis 5C sind verschiedene Montagebeispiele des Kopplungselementes 11 im Bereich der Aufnahme 16 dargestellt. Bei Figur 5A ist ein teilweise offenes Vierkantprofil als Anker 2 vorgesehen, das in der Aufnahme 16 angeordnet ist. Der Anker 2 ist mit Spiel in der Aufnahme 16 angeordnet und wird über die als Schrauben ausgebildeten Befestigungsmittel 12 in der Aufnahme 16 fixiert. Hierfür werden die Schrauben so weit in die Seitenwände 15 eingedreht, bis deren Stirnkanten an dem Anker 2 anliegen und dadurch das Kopplungselement 11 klemmend festgelegt wird. Die Gewichtskräfte werden über das Kopplungselement 11 durch eine Stirnseite 17 übertragen, die oben auf dem Anker 2 aufliegt.

In Figur 5B ist ein Anker 2' als Doppel-T-Profil ausgebildet und auch bei dieser Ausgestaltung des Ankers 2' kann das Kopplungselement 11 in identischer Weise festgelegt werden. Die Befestigungsmittel 12 werden an den äußeren Flächen des Ankers 2' festgeklemmt, während eine Stirnseite 17 des Kopplungselementes 11 auf den Anker 2' aufliegt.

In Figur 5C ist ein Anker 2" als kreisförmiges Hohlprofil ausgebildet, das ebenfalls an dem Kopplungselement 11 festgelegt werden kann. Dabei ist der Anker 2" mit Spiel in der Aufnahme 16 angeordnet und wird über die Befestigungsmittel 12 klemmend festgelegt.

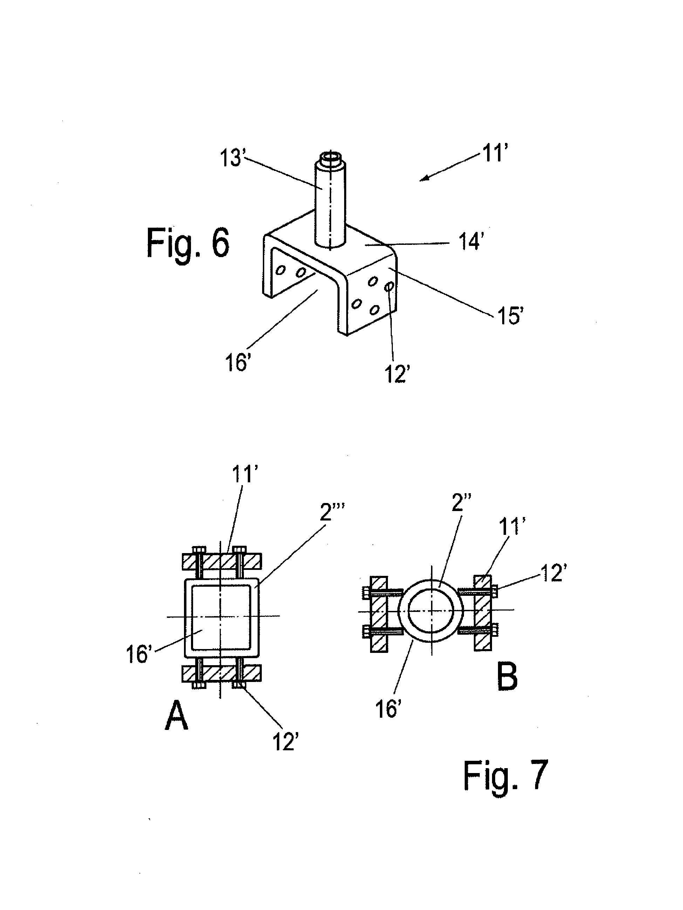

In Figur 6 ist eine modifizierte Ausführungsform eines Kopplungselements 11' gezeigt, das einen nach oben vertikal hervorstehenden Lagerzapfen 13' aufweist. Am unteren Ende des Lagerzapfens 13' ist eine horizontale Auflagefläche 14' ausgebildet, die als Axiallager für den Träger 8 dient. Der Träger 8 kann wie bei dem ersten Ausführungsbeispiel ausgebildet sein.

Im unteren Bereich weist das Kopplungselement 11' zwei voneinander beabstandete ebene Seitenwände 15' auf, zwischen denen eine Aufnahme 16' angeordnet ist. In den Seitenwänden 15' sind mehrere Befestigungsmittel 12' zur Fixierung des Kopplungselementes 11' an einem Anker vorgesehen.

In den Figuren 7A und 7B ist das Kopplungselement 11' an unterschiedlichen Ankern gezeigt. In Figur 7A ist ein geschlossenen Vierkantprofil als Anker 2"' vorgesehen, wobei ein oberer Abschnitt des Ankers 2"' in die Aufnahme 16' eingefügt ist und das Kopplungselement 11' auf den Anker 2"' aufliegt, Für eine seitliche Stabilität sind die Befestigungsmittel 12' klemmend an dem Anker 2"' festgelegt.

In Figur 7B ist ein kreisrunder Anker 2" vorgesehen, an dem die Befestigungsmittel 12' des Kopplungselementes 11' festgelegt sind.

Durch die Anordnung eines Kopplungselementes 11 bzw. 11' zwischen dem Träger 8 und dem Anker 2, 2', 2", 2"' kann die Nachführvorrichtung unabhängig von der tatsächlichen Gestaltung des Ankers vorgefertigt werden. Die jeweiligen Anker 2, 2', 2", 2"' können je nach Bodenbeschaffenheit aufgestellt und bodenseitig verankert werden, so dass die Aufstellung einer Solaranlage über die universellen Kopplungselementes 11 bzw. 11' in kurzer Zeit erfolgen kann.

## Patentansprüche

1. Nachführvorrichtung (1) für ein Solarelement, mit einem um eine Achse drehbaren Träger (8), der über ein Antriebselement (10) drehbar ist, und einem an einem Anker (2) festlegbaren Kopplungselement (11), das eine Axiallagerfläche (14, 14') für den Träger (8) aufweist und eine Aufnahme (16, 16') ausbildet, in die ein Anker (2, 2', 2", 2"') einfügbar ist und über Befestigungsmittel (12, 12') klemmend festlegbar ist, wobei die Aufnahme (16, 16') als Hohlraum ausgebildet ist, in dem ein oberer Abschnitt des Ankers (2, 2', 2", 2"') einfügbar ist und das Kopplungselement (11,11') auf der zum Anker (2, 2', 2", 2"') gewandten Seite ein Hohlprofil aufweist, in dem die Aufnahme (16, 16') ausgebildet ist, **dadurch gekennzeichnet, dass** das Kopplungselement (11, 11') einen nach oben hervorstehenden Lagerzapfen (13, 13') aufweist, auf den der Träger (8, 8') aufgesteckt ist.

2. Nachführvorrichtung nach Anspruch 1, **dadurch gekennzeichnet, dass** die Befestigungsmittel (12, 12') relativ zu der Aufnahme (16, 16') des Kopplungselementes (11, 11') verstellbar sind.

3. Nachführvorrichtung nach Anspruch 1 oder 2, **dadurch gekennzeichnet, dass** an mindestens einer die Aufnahme (16, 16') umgebenden Seitenwand (15, 15') Öffnung, insbesondere eine Gewindeöffnung, für ein Befestigungsmittel (12, 12') ausgebildet ist.

4. Nachführvorrichtung nach einem der Ansprüche 1 bis 3, **dadurch gekennzeichnet, dass** an dem Kopplungselement (11, 11') eine horizontale Axiallagerfläche (14, 14') ausgebildet ist, auf die der drehbare Träger (8) aufliegt.

5. Nachführvorrichtung nach einem der Ansprüche 1 bis 4, **dadurch gekennzeichnet, dass** an dem Träger (8) ein Trägerrahmen (4) gehalten ist, an dem ein Solarelement festgelegt ist.

6. Nachführvorrichtung nach einem der Ansprüche 1 bis 5, **dadurch gekennzeichnet, dass** das Kopplungselement (11, 11') eine Axiallagerfläche (14) aus Kunststoff aufweist.

## Claims

1. Tracking device (1) for a solar element, comprising a support (8) which can be rotated about an axis and which can be rotated via a drive element (10), and a coupling element (11) which can be fixed to an anchor (2), has an axial bearing surface (14, 14') for the support (8) and forms a receptacle (16, 16') into which an anchor (2, 2', 2'', 2"') can be inserted and can be fixed in a clamped manner via fastening means (12, 12'), wherein the receptacle (16, 16') is formed as a cavity in which an upper portion of the anchor (2, 2', 2", 2"') can be inserted and the coupling element (11, 11') has, on the side facing the anchor (2, 2', 2", 2"'), a hollow profile in which the receptacle (16, 16') is formed, **characterized in that** the coupling element (11, 11') has an upwardly projecting bearing pin (13, 13') onto which the support (8, 8') is plugged.

2. Tracking device according to Claim 1, **characterized in that** the fastening means (12, 12') are adjustable relative to the receptacle (16, 16') of the coupling element (11, 11').

3. Tracking device according to Claim 1 or 2, **characterized in that** an opening, in particular a threaded opening, for a fastening means (12, 12') is formed in at least one side wall (15, 15') surrounding the receptacle (16, 16').

4. Tracking device according to one of Claims 1 to 3, **characterized in that** a horizontal axial bearing surface (14, 14') on which the rotatable support (8) bears is formed on the coupling element (11, 11').

5. Tracking device according to one of Claims 1 to 4, **characterized in that** a support frame (4) to which a solar element is fixed is held on the support (8).

6. Tracking device according to one of Claims 1 to 5, **characterized in that** the coupling element (11, 11') has an axial bearing surface (14) made of plastic.

## Revendications

1. Dispositif de poursuite (1) pour un élément solaire comportant un support (8) mobile en rotation autour d'un axe, dont la rotation est commandée par un élément d'entrainement (10) et un élément d'accouplement (11) pouvant être fixé à un induit (2) et qui comporte une surface d'appui axiale (14, 14') pour le support (8) et forme un logement de réception (16, 16') dans lequel un induit (2, 2', 2", 2"') peut être inséré et bloqué par l'intermédiaire de moyens de fixation (12, 12'), le logement de réception (16, 16') étant réalisé sous la forme d'un volume creux dans lequel peut être inséré le tronçon supérieur de l'induit (2, 2', 2 ", 2'") et l'élément d'accouplement (11, 11') comporte sur sa face tournée vers l'induit (2, 2', 2", 2"') un profil creux dans lequel est réalisé le logement de réception (16, 16'),
**caractérisé en ce que**
l'élément d'accouplement (11, 11') comporte un tourillon (13, 13') faisant saillie vers le haut sur lequel est enfiché le support (8, 8').

2. Dispositif de poursuite conforme à la revendication 1,
**caractérisé en ce que**
les moyens de fixation (12, 12') peuvent être réglés par rapport au logement de réception (16, 16') de l'élément d'accouplement (11, 11').

3. Dispositif de poursuite conforme à la revendication 1 ou 2,
**caractérisé en ce qu'**
au moins une paroi latérale (15, 15') entourant le logement de réception (16, 16') est munie d'une ouverture, en particulier d'une ouverture filetée pour des moyens de fixation (12, 12').

4. Dispositif de poursuite conforme à l'une des revendications 1 à 3,
**caractérisé en ce que**
sur l'élément d'accouplement (11, 11') est formée une surface d'appui axiale horizontale (14, 14') sur laquelle s'applique le support mobile en rotation (8).

5. Dispositif de poursuite conforme à l'une des revendications 1 à 4,
**caractérisé en ce que**
sur le support (8) est maintenu un châssis support (4) sur lequel est fixé un élément solaire.

6. Dispositif de poursuite conforme à l'une des revendications 1 à 5,
**caractérisé en ce que**
l'élément d'accouplement (11, 11') comporte une surface d'appui axiale (14) en matériau synthétique.
